# EUROPEAN PATENT APPLICATION

(11) **EP 4 176 737 A1**
(43) Date of publication of application: **10.05.2023**
(21) Application number: 20944625.1
(22) Date of filing: 06.07.2020
(51) Int. Cl.: A24F 23/02

(54) **ORAL TOBACCO PRODUCT**

(71) Applicant: Japan Tobacco Inc., Tokyo 105-6927 (JP)
(72) Inventor: KAIHATSU, Yutaka, Tokyo 130-8603 (JP); KATAYAMA, Kazuhiko, Tokyo 130-8603 (JP)
(74) Representative: Hoffmann Eitle
(86) International application number: PCT/JP2020/026451
(87) International publication number: WO 2022/009280

(57) **Abstract**

Provided is an oral tobacco product in which the amount of an oral tobacco material relative to a gum molded body can be changed in accordance with feelings and preferences of a user. The oral tobacco product includes an oral tobacco material that contains a tobacco raw material, a gum molded body that contains a gum base and that does not contain a tobacco raw material, and a packaging material that houses each of the oral tobacco material and the gum molded body in a state of being separated from each other.

## Description

### Technical Field

The present invention relates to an oral tobacco product.

### Background Art

There is a known chewable oral tobacco composition that contains a tobacco raw material from which a tobacco component is to be eluted and a gum base (refer to, for example, PTLs 1 to 4). A user chews this type of an oral tobacco composition in the oral cavity to enjoy a flavor (a taste as tobacco) produced by a tobacco component that is eluted from a tobacco raw material.

### Citation List

### Patent Literature

PTL 1: Japanese Patent No. 6129332
PTL 2: International Publication No. 2013/187402
PTL 3: Japanese Unexamined Patent Application Publication (Translation of PCT Application) No. 2010-538669
PTL 4: Japanese Patent No. 6228544

### Summary of Invention

### Technical Problem

However, in an oral tobacco composition containing a tobacco raw material and a gum base in the art, the tobacco raw material and the gum base are already integrated at the time of use by a user. It is thus difficult for a user to enjoy the oral tobacco composition by changing the amount of the tobacco raw material relative to the gum base in accordance with preferences and feelings of the user.

The present invention has been made in consideration of the aforementioned circumstances, and an object of the present invention is to provide an oral tobacco product in which the amount of an oral tobacco material relative to a gum molded body can be changed in accordance with feelings and preferences of a user.

### Solution to Problem

An oral tobacco product according to the present invention for solving the aforementioned problem includes: an oral tobacco material that contains a tobacco raw material; a gum molded body that contains a gum base and that does not contain a tobacco raw material; and a packaging material that houses each of the oral tobacco material and the gum molded body in a state of being separated from each other. The packaging material may include the tobacco housing portion that houses the oral tobacco material, and a gum housing portion that houses the gum molded body, respectively, in a state in which the oral tobacco material and the gum molded body are separated from each other.

The packaging material may be configured to house a plurality of different types of gum molded bodies.

The packaging material may be configured to house a plurality of different types of oral tobacco materials.

The gum molded body may include a tobacco reception portion for receiving the oral tobacco material. In this case, the tobacco reception portion may be hollow or recessed.

The oral tobacco material may be solid. Alternatively, the oral tobacco material may be gelatinous or liquid. In this case, the gelatinous or liquid oral tobacco material in a state of being charged in a container for charging the gelatinous or liquid oral tobacco material may be housed in the tobacco housing portion.

Note that solutions to problems in the present invention can be employed in combination as far as possible. Advantageous Effects of Invention

According to the present invention, it is possible to provide an oral tobacco product in which the amount of an oral tobacco material relative to a gum molded body can be changed in accordance with feelings and preferences of a user.

### Brief Description of Drawings

[Fig. 1] Fig. 1 is a perspective view illustrating an appearance of an oral tobacco product according to Embodiment 1.
[Fig. 2] Fig. 2 is a top view of a body part after an outer package according to Embodiment 1 is opened.
[Fig. 3] Fig. 3 is a sectional view in the direction of arrows A-A in Fig. 2.
[Fig. 4] Fig. 4 is a view illustrating an oral tobacco material and a gum molded body according to Embodiment 1.
[Fig. 5] Fig. 5 is a view describing a measurement unit 100 that measures fragility of an oral tobacco material 3.
[Fig. 6] Fig. 6 is a view illustrating a sectional shape of a gum molded body according to Embodiment 1, including a tobacco reception portion.
[Fig. 7] Fig. 7 is a view describing a procedure of handling an oral tobacco product according to Embodiment 1.
[Fig. 8] Fig. 8 is a view describing a gum molded body and an oral tobacco material according to Modification 1 of Embodiment 1.
[Fig. 9] Fig. 9 is a view describing a gum molded body and an oral tobacco material according to Modification 2 of Embodiment 1.
[Fig. 10] Fig. 10 is a view describing a gum molded body and an oral tobacco material according to Modification 3 of Embodiment 1.
[Fig. 11] Fig. 11 is a view describing a gum molded body and an oral tobacco material according to Modification 4 of Embodiment 1.
[Fig. 12] Fig. 12 is a top view of an inner pack according to Embodiment 2.
[Fig. 13] Fig. 13 is a view illustrating an oral tobacco material according to Embodiment 2.
[Fig. 14] Fig. 14 is a view illustrating a situation in which a tobacco fragment that is obtained by cutting an oral tobacco material according to Embodiment 2 is to be inserted into a tobacco reception portion of a gum molded body
[Fig. 15] Fig. 15 is a top view of an inner pack according to Embodiment 3.
[Fig. 16] Fig. 16 is a view describing a procedure of handling an oral tobacco product according to Embodiment 3. Description of Embodiments

Here, embodiments of an oral tobacco product according to the present invention will be described on the basis of the drawings. Dimensions, materials, and shapes of components described in the embodiments, the relative arrangement thereof, and the like are not intended to limit the technical scope of the invention thereto only unless specific description is provided in particular.

### <Embodiment 1>

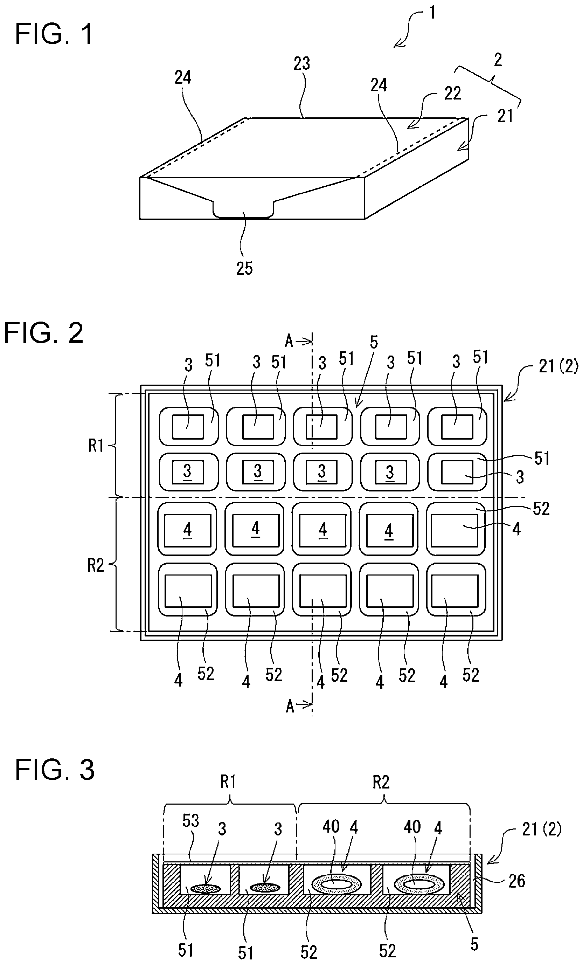

Fig. 1 is a perspective view illustrating an appearance of an oral tobacco product 1 according to Embodiment 1. The oral tobacco product 1 includes an outer package 2 as a packaging material. The outer package 2 illustrated in Fig. 1 is formed of a box-shaped carton. A paper material such as paperboard, cardboard, manila cardboard, coated paper, or the like is suitable for the outer package 2. The material of the outer package 2 is, however, not limited thereto. For example, a resin material such as plastic or the like may be used.

The outer package 2 includes a box-shaped body part 21 and a cover part 22 that covers an upper surface opening of the body part 21. The cover part 22 is connected to an upper edge of the body part 21 via a hinge 23 to be openable and closable. The cover part 22 is provided with a perforation line 24, a tab 25, and the like, as appropriate. A user lifts the cover part 22 in a direction in which the cover part 22 is opened with respect to the body part 21 by, for example, holding the tab 25 and opens the outer package 2 by cutting the cover part 22 along the perforation line 24.

Fig. 2 is a top view of the body part 21 after the outer package 2 according to Embodiment 1 is opened. An inner pack 5 that houses an oral tobacco material 3 and a gum molded body 4 is disposed in an internal space of the outer package 2. Fig. 3 is a view schematically illustrating a section in the direction of arrows A-A in Fig. 2. The reference sign 26 in Fig. 3 indicates a housing portion formed in an inner portion of the body part 21. The inner pack 5 illustrated in Fig. 2 and Fig. 3 is housed in the housing portion 26 of the body part 21.

The inner pack 5 has a shape of a tray and includes a tobacco housing portion 51 as a recessed portion for housing the oral tobacco material 3, and a gum housing portion 52 as a recessed portion for housing the gum molded body 4. In the present embodiment, the inner pack 5 is provided with a plurality of the tobacco housing portions 51 and a plurality of the gum housing portions 52. Consequently, in the inner pack 5, the oral tobacco material 3 and the gum molded body 4 are housed in a state of being separated. In the example illustrated in Fig. 2, ten tobacco housing portions 51 are provided in a first region R1 of the inner pack 5, and the oral tobacco material 3 is housed in each of the tobacco housing portions 51. In addition, ten gum housing portions 52 are provided in a second region R2 of the inner pack 5, and the gum molded body 4 is housed in each of the gum housing portions 52. Note that the numbers of the tobacco housing portions 51 and the gum housing portions 52 that are provided in the inner pack 5 are not particularly limited. The numbers of the tobacco housing portions 51 and the gum housing portions 52 that are provided in the inner pack 5 may differ from each other. The reference sign 53 in Fig. 3 indicates a hermetic seal that seals the tobacco housing portions 51 and the gum housing portions 52 in the inner pack 5. The hermetic seal 53 in the inner pack 5 is not essential. However, from the point of view of flavor retainability of the oral tobacco material 3 and the gum molded body 4, it is preferable that the oral tobacco material 3 and the gum molded body 4 be air-tightly packed. The oral tobacco material 3 and the gum molded body 4 may be packed individually (for example, in a pillow shape).

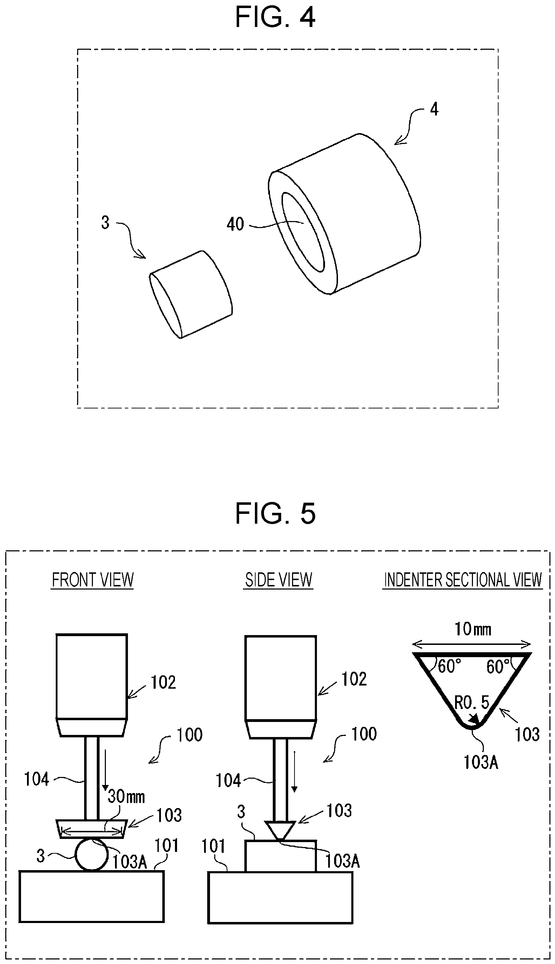

Fig. 4 is a view illustrating the oral tobacco material 3 and the gum molded body 4 according to Embodiment 1. The oral tobacco material 3 contains a tobacco raw material from which a tobacco component is eluted when being chewed by a user. In the example illustrated in Fig. 4, the oral tobacco material 3 is molded in a solid tablet shape. For example, the oral tobacco material 3 can contain a binder, a humectant, a flavor, and the like, in addition to a tobacco raw material. Note that the constitution of the oral tobacco material 3 may contain components other than these.

As a tobacco raw material contained in the oral tobacco material 3, a tobacco raw material of a raw material type that is widely used in general tobacco products, for example, a Burley type, a yellow type, and the like can be employed. The weight of the tobacco raw material contained in one oral tobacco material 3 may be, for example, about 10 mg to 300 mg but is not particularly limited. Although the amount of a flavor component contained in one oral tobacco material 3 is not particularly limited, it is preferable that the content of, for example, sugar and nicotine be within a specific range.

The humectant contained in the oral tobacco material 3 is constituted by, for example, polyhydric alcohol. The polyhydric alcohol can include glycerin, propylene glycol, sorbitol, xylitol, and erythritol. These polyhydric alcohols are usable alone or in combination of two or more of them. The content of the humectant in the oral tobacco material 3 is preferably in a range of 5 to 20 wt%. As examples of a binder contained in the oral tobacco material 3, there are presented, for example, guar gum, xanthan gum, CMC (carboxymethyl cellulose), CMC-Na (sodium salt of carboxymethyl cellulose), pullulan, hydroxypropyl cellulose (HPC), methyl cellulose, hydroxyl methyl cellulose, and the like. The content of the binder in the oral tobacco material 3 is preferably in a range of 2 to 10 wt%.

As examples of the type of a flavor contained in the oral tobacco material 3, there are presented acetanisole, acetophenone, acetylpyrazine, 2-acetylthiazole, alfalfa extract, amyl alcohol, amyl acetate, trans-anethole, star anise oil, apple juice, Peru balsam oil, beeswax absolute, benzaldehyde, benzoin resinoid, benzyl alcohol, benzyl benzoate, benzyl phenylacetate, benzyl propionate, 2,3-butanedione, 2-butanol, butyl acetate, acetic acid, caramel, cardamom oil, carob absolute, β-carotene. carrot juice, L-carvone, β-cayophyllene, cassia bark oil, cedarwood oil, celery seed oil, chamomile oil, cinnamaldehyde. cinnamic acid, cinnamyl alcohol, cinnamyl cinnamate, citronella oil, DL-citronellol, clary sage extract, cocoa, coffee, cognac oil, coriander oil, cuminaldehyde, davana oil, δ-decalactone, γ-decalactone, decanoic acid, dill herb oil, 3.4-dimethyl-1,2-cyclopentanedione, 4,5-dimethyl-3-hydroxy-2,5-dihydrofuran-2-one, 3,7-dimethyl-6-octenoic acid, 2,3-dimethylpyrazine, 2,5-dimethylpyrazine, 2,6-dimethylpyrazine, ethyl 2-methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, genet absolute, gentian root infusion, geraniol, geranyl acetate, grape juice, guaiacol, guava extract, γ-heptalactone. γ-hexalactone, hexanoic acid, cis-3-hexen-1-ol, hexyl acetate, hexyl alcohol, hexyl phenylacetate, honey, 4-hydroxy-3-pentenoic acid lactone, 4-hydroxy-4-(3-hydroxy-1-butenyl)-3,5,5-trimethyl-2-cyclohexen-1-one, 4-(p-hydroxyphenyl)-2-butanone, 4-hydroxyundecanoic acid sodium salt, immortelle absolute, β-ionone, isoamyl acetate, isoamyl butyrate, isoamyl phenylacetate, isobutyl acetate, isobutyl phenylacetate, jasmine absolute, kola nut tincture, labdanum oil, lemon terpeneless oil, licorice extract, linalool, linalyl acetate, lovage root oil, maltol, maple syrup, menthol, menthone, L-menthyl acetate, p-methoxy benzaldehyde, methyl-2-pyrrolyl ketone, methyl anthranilate, methyl phenylacetate, methyl salicylate, 4'-methyl acetophenone, methyl cyclopentenolone, 3-methyl valeric acid, mimosa absolute, molasses, myristic acid, nerol, nerolidol, γ-nonalactone, nutmeg oil, δ-octalactone, octanal, octanoic acid, orange flower oil, orange oil, orris root oil, palmitic acid, ω-pentadecatactone, peppermint oil, petitgrain paraguay oil, phenethyl alcohol, phenethyl phenylacetate, phenylacetic acid, piperonal, plum extract, propenyl guaethol, propyl acetate, 3-propylidene phthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7.8-tetrahydroquinoxaline. 1.5.5,9-tetramethyl-13-oxacyclo(8.3.0.0(4.9))tridecane, 2,3,5,6-tetramethylpyrazine, thyme oil, tomato extract, 2-tridecanone, triethyl citrate, 4-(2,6,6-trimethylcyclohex-1-enyl)but-2-en-4-one, 2,6,6-trimethylcyclohex-2-ene-1, 4-dione, 4-(2,6,6-trimethylcyclohexa-1,3-dienyl)but-2-en-4-one, 2,3,5-trimethylpyrazine, γ-undecalactone, γ-valerotactone, vanilla extract, vanillin, veratraldehyde, violet leaf absolute, N-ethyl-p-menthane-3-carbamide(WS-3), ethyl-2-(p-menthane-3-carboxiamide)acetate(WS-5), sugar (sucrose, fructose, and the like), cocoa powder, carob powder, coriander powder, licorice powder, orange peel powder, rose hip powder, chamomile flower (flower) powder, lemon verbena powder, peppermint powder, leaf powder, spearmint powder, tea powder, natural plant flavor (for example, jasmine oil, lemon oil, vetiver oil, lovage oil), ester (for example, menthyl acetate, isoamyl propionate, and the like), alcohols (for example, phenylethyl alcohol, cis-6-nonene-1-ol, and the like), and the like. One of these flavors may be used alone, or two or more of these flavors may be used in combination.

The method of manufacturing the oral tobacco material 3 is not particularly limited. The oral tobacco material 3 may be formed by an appropriate manufacturing method such as extrusion molding, granulation, tablet molding, spray drying, or the like in accordance with the shape thereof.

The fragility of the oral tobacco material 3 is preferably in a range of 5 to 100 N and more preferably in a range of 10 to 50 N.

Fig. 5 is a view describing a measurement unit 100 that measures fragility of the oral tobacco material 3. A front view of the measurement unit 100 is schematically illustrated on the left side, and a side view of the measurement unit is schematically illustrated at the center. As the measurement unit 100, a general compression tester (for example, a compression tester (EZ-tester) manufactured by Shimadzu Corporation, or the like) is usable. The measurement unit 100 includes a flat table 101 on which a fragility measurement object (oral tobacco material 3) is to be placed, a loading unit 102, and the like. The loading unit 102 includes an ascending-descending rod 104 having a tip to which an indenter 103 (line contact body) is attached, a load cell (not illustrated), and the like and supports the ascending-descending rod 104 to be able to ascending and descending in a direction orthogonal to the table 101. A sectional view of the indenter 103 of the loading unit 102 is schematically illustrated on the right side in Fig. 5. The indenter 103 is made of SUS304. The indenter 103 has a substantially triangular section in which each side is 10 mm. A force application portion 103A at the lower end thereof that applies a force to a fragility measurement object (oral tobacco material 3) has a corner R (radius) of 0.5 mm and a length of 30 mm. In fragility measurement of the oral tobacco material 3, a fragility measurement object (oral tobacco material 3) is placed at a predetermined position on the table 101, thereafter, the ascending-descending rod 104 of the loading unit 102 is lowered at a predetermined speed, and a load is applied to the fragility measurement object (oral tobacco material 3) placed between the table 101 and the force application portion 103A of the indenter 103. In the measurement, a speed at which the loading unit 102 lowers the ascending-descending rod 104 is set to 10 mm/min. The load applied to the fragility measurement object (oral tobacco material 3) during the load application is measured by the road cell. The value of the applied load at the time when the fragility measurement object (oral tobacco material 3) is broken can be considered as fragility (strength) of the fragility measurement object (oral tobacco material 3).

Next, the gum molded body 4 will be described. The gum molded body 4 contains a gum base, a humectant, sugar, flavor, and the like. In the example illustrated in Fig. 4, the gum molded body 4 is molded in a solid tablet shape. As described above, the gum molded body 4 does not contain a tobacco raw material. As the gum base of the gum molded body 4, a general gum base used in chewing gum is applicable. In one example, the content of the gum base in the gum molded body 4 is, for example, within a range of 25 wt% to 60 wt%. The gum molded body 4 according to the present embodiment is constituted by, for example, polyhydric alcohol as a humectant. The polyhydric alcohol can include glycerin, propylene glycol, sorbitol, xylitol, and erythritol. These polyhydric alcohols are usable alone or in combination of two or more of them. The gum molded body 4 may contain, as sugar, powdered sorbitol, a sorbitol aqueous solution, or the like. The gum molded body 4 may contain, as flavor, menthol or the like. The gum molded body 4 may contain, as appropriate, the aforementioned flavors presented as examples of the flavor contained in the oral tobacco material 3. The gum molded body 4 may contain components other than those described above and may not contain some components such as sugar, flavor, and the like.

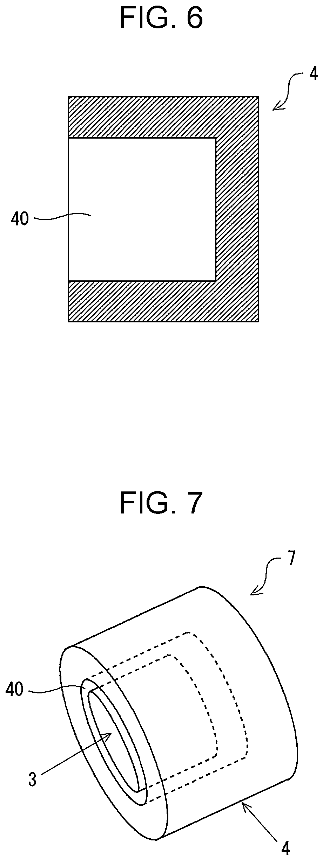

In the present embodiment, the gum molded body 4 includes a hollow or recessed tobacco reception portion 40 for receiving the oral tobacco material 3. In the example illustrated in Fig. 4, the tobacco reception portion 40 of the gum molded body 4 is formed as a cavity portion formed as a recessed portion that opens on a surface of the gum molded body 4. Fig. 6 is a view illustrating a sectional shape of the gum molded body 4 according to Embodiment 1, including the tobacco reception portion 40. The capacity (capacity of the cavity portion) of the tobacco reception portion 40 of the gum molded body 4 is larger than the oral tobacco material 3, and the oral tobacco material 3 can be inserted into the inner portion of the tobacco reception portion 40. The tobacco reception portion 40 is not required to be hollow or recessed.

In the oral tobacco product 1 configured as described above, after the hermetic seal 53 of the inner pack 5 is opened by a user, typically, one each of the oral tobacco material 3 housed in the tobacco housing portion 51 and the gum molded body 4 housed in the gum housing portion 52 are taken out. After inserting and housing, as illustrated in Fig. 7, the oral tobacco material 3 in the tobacco reception portion 40 of the gum molded body 4, the user holds in the oral cavity the oral tobacco material 3 and the gum molded body 4 that are integrated with each other (hereinafter, the oral tobacco material 3 and the gum molded body 4 that are thus integrated with each other are referred to as "tobacco gum 7") and chews the tobacco gum 7. Consequently, the user can take a tobacco component eluted from the oral tobacco material 3. Since the user chews the tobacco gum 7 in a state in which the oral tobacco material 3 and the gum molded body 4 are combined together, the user can obtain an appropriate chewiness imparted by the gum base of the gum molded body 4 and can taste sweetness imparted by sugar of the gum molded body 4, flavor imparted by menthol, and the like, together with the tobacco component.

In the oral tobacco product 1 according to the present embodiment, the inner pack 5 houses the oral tobacco material 3 and the gum molded body 4 in a separated state. In other words, differently from existing oral tobacco compositions, the oral tobacco material 3 and the gum molded body 4 are not integrally molded. Accordingly, a user can combine the oral tobacco material 3 and the gum molded body 4 in accordance with feelings and likings at each time, as in the aforementioned example, and chew the oral tobacco material 3 and the gum molded body 4 together. In addition, the user can chew only the gum molded body 4 containing no tobacco raw material to enjoy the flavor thereof. Moreover, in the oral tobacco product 1 according to the present embodiment, the amount (the number) of the oral tobacco materials 3 that are to be chewed together with one gum molded body 4 can be changed in accordance with feelings and likings when the tobacco gum 7 is to be tasted. For example, it is possible to throw one gum molded body 4 and a plurality of oral tobacco materials 3 into the oral cavity or throw a plurality of divided pieces of one oral tobacco material 3 together with the gum molded body 4 into the oral cavity and possible to taste the tobacco gum 7 by adjusting the amount of a flavor component eluted as a result of these being chewed together in accordance with preferences of a user. The tobacco reception portion 40 of the gum molded body 4 may be formed as a cavity portion having a size with which a plurality of the oral tobacco materials 3 can be housed. As described above, the oral tobacco product 1 according to the present embodiment enables the amount of the oral tobacco material 3 relative to one gum molded body 4 to be changed freely in accordance with feelings and likings and thus is easily enjoyed in accordance with preferences of a user. Therefore, it is possible to provide the oral tobacco product 1 that is highly satisfactory for a user.

In addition, in the oral tobacco product 1 according to the present embodiment, the gum molded body 4 includes the tobacco reception portion 40 for receiving the oral tobacco material 3. Therefore, a user can easily complete the tobacco gum 7 in which the oral tobacco material 3 and the gum molded body 4 are integrally combined by housing the oral tobacco material 3 in the tobacco reception portion 40 of the gum molded body 4 by the hands. Consequently, the user can easily throw the tobacco gum 7 into the oral cavity. As a result of the oral tobacco material 3 being housed in the tobacco reception portion 40 of the gum molded body 4, it is possible to maintain the integrity of them even during chewing. Therefore, the gum molded body 4 and the oral tobacco material 3 are not easily separated from each other in the oral cavity when the tobacco gum 7 is chewed.

In addition, a user can reduce a chance of only the oral tobacco material 3 coming into direct contact with the inside of the oral cavity by chewing the tobacco gum 7 with the oral tobacco material 3 housed in the tobacco reception portion 40 of the gum molded body 4. Consequently, the texture (mouthfeel) of the tobacco gum 7 is improved, and the eluting speed of a tobacco component contained in a tobacco raw material of the oral tobacco material 3 is easily controlled appropriately.

The oral tobacco product 1 according to the present embodiment can employ various modifications. For example, the first region R1 in which the tobacco housing portion 51 is disposed and the second region R2 in which the gum housing portion 52 is disposed are provided integrally in the inner pack 5 according to the present embodiment. The inner pack 5 is, however, not limited thereto. That is, the inner pack 5 may be housed in the housing portion 26 of the outer package 2 (body part 21) in a form in which the first region R1 and the second region R2 are separated. In addition, although a form in which the tray-shaped inner pack 5 is disposed in an inner portion of the outer package 2 has been described as an example in the present embodiment, the form is not limited thereto. For example, one or a plurality of blister packs may be arranged instead of the inner pack 5, and the oral tobacco material 3 and/or the gum molded body 4 may be housed in the blister packs. In this case, the tobacco housing portion 51 and/or the gum housing portion 52 is formed in the blister pack. Alternatively, without providing the inner pack 5, blister packs, and the like in the housing portion 26 of the outer package 2 (body part 21), the oral tobacco material 3 and the gum molded body 4 may be housed in a separated form directly in the housing portion 26. For example, each of the oral tobacco material 3 and the gum molded body 4 may be individually packed by a packaging material, a plurality of the oral tobacco materials 3 may be packed into one by a packaging material, or a plurality of the gum molded bodies 4 may be packed into one by a packaging material. Then, the oral tobacco materials 3 and the gum molded bodies 4 in such a state may be housed in the housing portion 26 of the outer package 2 (body part 21).

In the oral tobacco product 1 according to the present embodiment, the oral tobacco materials 3 of different types of tastes, flavors, and the like may be housed in the tobacco housing portions 51 in the first region R1 of the inner pack 5. For example, in the first region R1 of the inner pack 5, the oral tobacco materials 3 of a plurality of different types of tobacco raw materials and flavors may be housed in the tobacco housing portions 51. In the second region R2 of the inner pack 5, the gum molded bodies 4 of different types of tastes, flavors, and the like may be housed in the gum housing portions 52. For example, in the second region R2 of the inner pack 5, the gum molded bodies 4 of a plurality of different types of sugars and flavors may be housed in the gum housing portions 52. Consequently, a user can taste and enjoy the tobacco gum 7 by changing the combination of the gum molded body 4 and the oral tobacco material 3 in accordance with feelings and preferences. Accordingly, it is possible to provide the oral tobacco product 1 capable of more flexibly responding to feelings and preferences of a user. Needless to say, in the aforementioned modifications, the types and the number of the oral tobacco materials 3 housed in the first region R1 of the inner pack 5 and the types and the number of the gum molded bodies 4 housed in the second region R2 are not particularly limited.

The shapes, the sizes, the number, the forms, and the like of the oral tobacco materials 3 housed in the tobacco housing portions 51 of the inner pack 5 are also not particularly limited. For example, the oral tobacco material 3 may be in a form other than a tablet form, such as a rod, string, plate, cylinder, or hollow form, or a form of a combination thereof. The oral tobacco material 3 may be in a granular form or a powder form. The form of the oral tobacco material 3 is not limited to a solid body (solid form) and may be gelatinous (gel form) or liquid. The forms such as the shapes, the sizes, the number, and the like of the tobacco housing portions 51 of the inner pack 5 can be changed, as appropriate, in accordance with the forms of the oral tobacco material 3 to be housed.

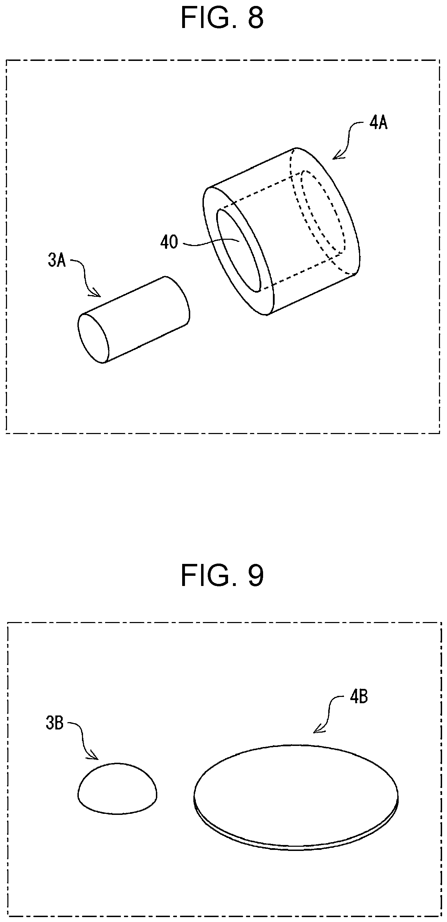

The shapes, the sizes, the number, the forms, and the like of the gum molded bodies 4 that are to be housed in the gum housing portions 52 of the inner pack 5 are not particularly limited. For example, the gum molded body 4 may not necessarily provided with the tobacco reception portion 40. In this case, a user places the oral tobacco material 3 taken out from the tobacco housing portions 51 on the gum molded body 4 taken out from the gum housing portions 52 and throws them together into the oral cavity. The gum molded body 4 may have, on a surface thereof, a recessed depression for receiving the gum molded body 4. Consequently, a user can place the oral tobacco material 3 on the gum molded body 4 more easily The gum molded body 4 may have a cylindrical shape, a sheet shape, or a hotdog shape. Fig. 8 is a view describing a gum molded body 4A and an oral tobacco material 3A according to Modification 1. The gum molded body 4A has a cylindrical shape and includes the tobacco reception portion 40 formed by a hollow portion provided at the center thereof. The oral tobacco material 3A illustrated in Fig. 8 has a rod shape to be insertable into the tobacco reception portion 40 of the gum molded body 4A. Consequently, a user can integrally hold the gum molded body 4A and the oral tobacco material 3A in the oral cavity and can maintain the integrity thereof even during chewing.

Fig. 9 is a view describing a gum molded body 4B and an oral tobacco material 3B according to Modification 2. The gum molded body 4B has a sheet shape having a planar projected area larger than that of the oral tobacco material 3B. Consequently, a user can easily make the tobacco gum 7 in which the oral tobacco material 3B and the gum molded body 4B are combined together by placing the oral tobacco material 3B on the sheet-shaped gum molded body 4B and wrapping the oral tobacco material 3B with the gum molded body 4B.

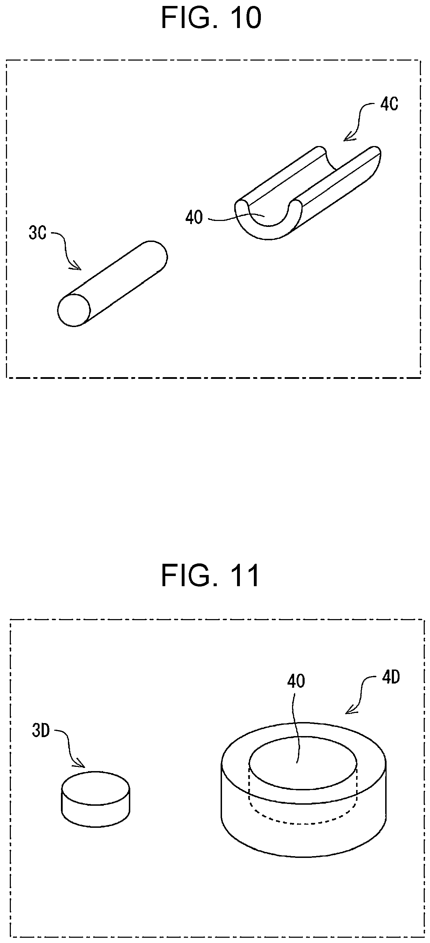

Fig. 10 is a view describing a gum molded body 4C and an oral tobacco material 3C according to Modification 3. The oral tobacco material 3C illustrated in Fig. 10 has a rod shape. The gum molded body 4C has a U-sectional shape or a semi-cylindrical shape with which the oral tobacco material 3C can be held by being sandwiched. The gum molded body 4C includes the recessed tobacco reception portion 40 extending in the longitudinal direction thereof and is capable of holding the oral tobacco material 3C by sandwiching the oral tobacco material 3C in the tobacco reception portion 40. Consequently, a user can integrally hold the gum molded body 4C and the oral tobacco material 3C in the oral cavity and can maintain the integrity thereof even during chewing.

Fig. 11 is a view describing a gum molded body 4D and an oral tobacco material 3D according to Modification 4. The oral tobacco material 3D illustrated in Fig. 11 has a tablet shape. The gum molded body 4D has a tablet shape larger than the oral tobacco material 3D and includes a recessed depression formed as the tobacco reception portion 40 on a surface thereof. The tobacco reception portion 40, which is a recessed depression formed on a surface of the gum molded body 4D, is capable of holding the oral tobacco material 3D by receiving the oral tobacco material 3D. Consequently, a user can hold the gum molded body 4D and the oral tobacco material 3D in a combined state in the oral cavity.

### <Embodiment 2>

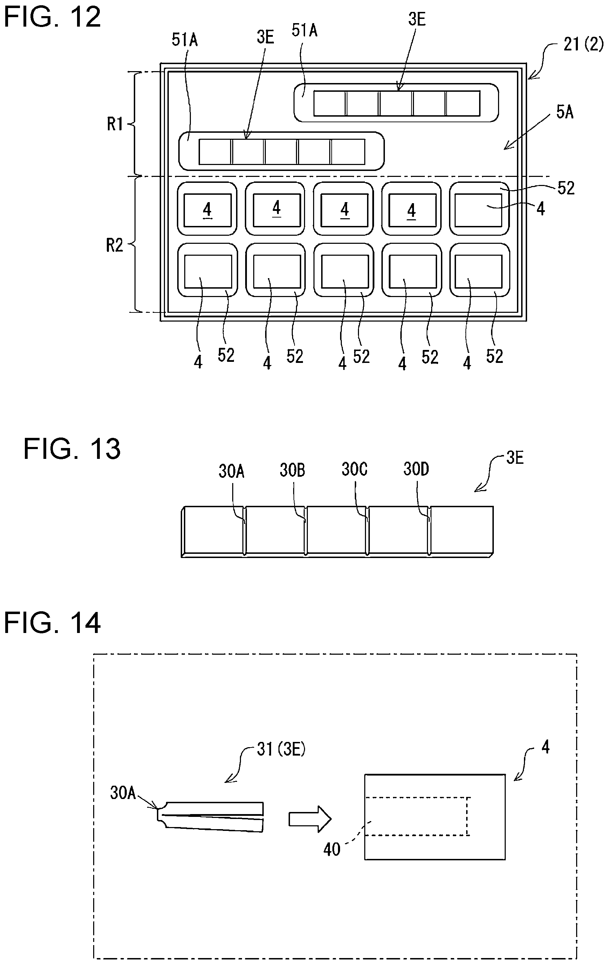

Next, Embodiment 2 will be described. Fig. 12 is a top view of an inner pack 5A according to Embodiment 2. The inner pack 5A according to Embodiment 2 differs from that in Embodiment 1 in terms of the form of a tobacco housing portion provided in the first region R1 and the form of an oral tobacco material housed in the tobacco housing portion. Hereinafter, differences from Embodiment 1 will be described mainly. Regarding the present embodiment, the same components as those in Embodiment 1 are given the same reference signs, and detailed description thereof is omitted.

Two tobacco housing portions 51A are provided in the first region R1 of the inner pack 5A illustrated in Fig. 12. A plate-shaped oral tobacco material 3E is housed in each of the tobacco housing portions 51A. The tobacco housing portions 51A each have an elongated flat shape to be able to house the plate-shaped oral tobacco material 3D. Fig. 13 is a view illustrating the oral tobacco material 3E according to Embodiment 2. The oral tobacco material 3E has a long flat plate shape and includes thin portions 30A to 30D that are provided at regular intervals in a long-side direction. The thin portions 30A to 30D are portions where the thickness of the oral tobacco material 3E is thin compared with the other portions. Each of the thin portions 30A to 30D extends from one edge portion to the other edge portion in a short-side direction of the oral tobacco material 3E. The thus formed oral tobacco material 3E is configured to be easily cut along the thin portions 30A to 30D so that the oral tobacco material 3E can be divided into small tobacco fragments.

In the example illustrated in Fig. 13, the thin portions 30A to 30D are provided at equal intervals at four locations in the oral tobacco material 3E and are configured such that the oral tobacco material 3E can be equally divided into five by a user. However, the forms such as the number of the thin portions 30A to 30D, the number, and the like in the oral tobacco material 3E are not particularly limited. The thin portions 30A to 30D in the oral tobacco material 3E are not essential. The thin portions 30A to 30D may not be provided.

As described above, the plate-shaped oral tobacco material 3E is housed in each of the tobacco housing portions 51A in the first region R1 of the inner pack 5A according to Embodiment 2. The form of the second region R2 of the inner pack 5A is the same as that in Embodiment 1. Ten gum molded bodies 4 in total are individually housed in the gum housing portions 52.

To chew the tobacco gum, a user takes out the plate-shaped oral tobacco material 3E from the tobacco housing portion 51A of the inner pack 5A and divides the oral tobacco material 3E along any of the thin portions 30A to 30D, as appropriate, to adjust the amount of the oral tobacco material 3E in accordance with feelings and likings. For example, the plate-shaped oral tobacco material 3E may be cut along the thin portion 30A illustrated in Fig. 13, and, after a tobacco fragment having a normal size is inserted into the tobacco reception portion 40 of the gum molded body 4 that is taken out from the gum housing portion 52, a tobacco gum that is constituted by a combination of the oral tobacco material 3E and the gum molded body 4 may be chewed. Alternatively, a tobacco fragment having a size two times the normal size obtained by cutting the plate-shaped oral tobacco material 3E along the thin portion 30B illustrated in Fig. 13 may be inserted into the tobacco reception portion 40 of the gum molded body 4, or a tobacco fragment having a size three times the normal size obtained by cutting the plate-shaped oral tobacco material 3E along the thin portion 30C may be inserted into the tobacco reception portion 40 of the gum molded body 4.

Fig. 14 illustrates a situation in which a tobacco fragment 31 having a size two times the normal size obtained by cutting the plate-shaped oral tobacco material 3E along the thin portion 30B illustrated in Fig. 13 is to be inserted into the tobacco reception portion 40 of the gum molded body 4. In the gum molded body 4 according to the present embodiment, the tobacco reception portion 40 has a size with which the tobacco fragment 31 having a size several times the normal size can be housed.
In the example illustrated in Fig. 14, a situation in which the tobacco fragment 31 is to be inserted into the tobacco reception portion 40 of the gum molded body 4 with the tobacco fragment 31 folded along a boundary at the thin portion 30B is illustrated. As described above, in the oral tobacco product 1 according to the present embodiment, the amount of the oral tobacco material 3E to be combined with one gum molded body 4 can be adjusted freely by a user. It is thus possible to provide the oral tobacco product 1 that is highly freely enjoyable and highly satisfactory for a user. The tobacco housing portion 51A in the first region R1 of the inner pack 5A illustrated in Fig. 12 may be covered by a re-peelable hermetic seal with week adhesive paste or the like to be able to store the plate-shaped oral tobacco material 3E repeatedly in an airtight state. The tobacco housing portion 51A may be covered by a cover with a zipper, or the like so that opening and hermetically sealing of the tobacco housing portion 51A are switchable. According to these, the airtightness of the tobacco housing portion 51A can be ensured repeatedly.

In the present embodiment, the plate-shaped oral tobacco materials 3E housed in the tobacco housing portions 51A of the inner pack 5A may contain tobacco raw materials of different types of flavors and thereby differ from each other in terms of the types of tastes, flavors, and the like. Similarly, the gum molded bodies 4 of a plurality of different types of tastes, flavors, and the like may be housed in the second region R2 of the inner pack 5A. Consequently, as described in a modification of Embodiment 1, a user can enjoy a tobacco gum by freely changing the combination of the gum molded body 4 and the oral tobacco material 3E in accordance with feelings and preferences.

### <Embodiment 3>

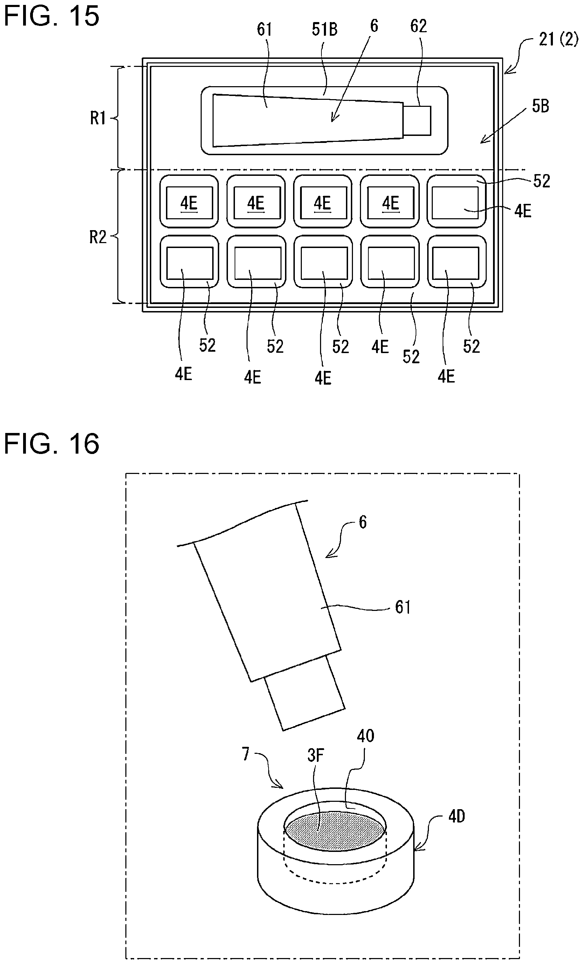

Next, Embodiment 3 will be described. Fig. 15 is a top view of an inner pack 5B according to Embodiment 3. The inner pack 5B according to Embodiment 3 differs from that in Embodiment 1 in terms of the form of a tobacco housing portion provided in the first region R1 and the shape of an oral tobacco material housed in the tobacco housing portion. Hereinafter, differences from Embodiments 1 and 2 will be described mainly. Regarding the present embodiment, the same components as those in Embodiments 1 and 2 are given the same reference signs, and detailed description thereof is omitted.

As illustrated in Fig. 15, a single tobacco housing portion 51B is provided in the first region R1 of the inner pack 5B. The tobacco housing portion 51B houses a tube container 6. A plurality of the gum housing portions 52 are provided in the second region R2 of the inner pack 5B. Each of the gum housing portions 52 houses the gum molded body 4D illustrated in Fig. 11. The numbers of the gum housing portions 52 and the gum molded bodies 4D housed in the gum housing portions 52 are not particularly limited. In the example illustrated in Fig. 15, ten gum housing portions 52 are provided in the second region R2 of the inner pack 5B.

The tube container 6 includes a container body 61 and a cover (cap) 62. A gelatinous (gel form) oral tobacco material is charged in an inner portion of the container body 61 of the tube container 6. In other words, in the present embodiment, a gelatinous oral tobacco material in a state of being charged in the tube container 6 (container body 61) is housed in the tobacco housing portion 51B in the first region R1 of the inner pack 5B. The gelatinous oral tobacco material charged in the tube container 6 can be configured to contain a tobacco raw material, a binder, a humectant, a flavor, and the like. The viscosity of the gelatinous oral tobacco material charged in the tube container 6 is preferably within a range of about 10 Pa to about 150 Pa. The gelatinous oral tobacco material charged in the tube container 6 may contain a gelling agent. As examples of a gelling agent, for example, there are presented pectin, gellan gum, sodium alginate, gum arabic, xanthan gum, tragacanth gum, and the like. When the oral tobacco material contains a gelling agent, the content of the gelling agent is preferably in the range of 0.1 wt% to 10 wt%.

As described with reference to Fig. 11, a recessed depression is formed as the tobacco reception portion 40 on a surface of the gum molded body 4D. Consequently, the gelatinous oral tobacco material squeezed from the tube container 6 is received by the recessed tobacco reception portion 40 formed on the gum molded body 4D, and the gelatinous oral tobacco material can be held on the gum molded body 4D.

For example, a user takes out the tube container 6 and the gum molded body 4D from the tobacco housing portion 51B and the gum housing portions 52 of the inner pack 5B according to the present embodiment, respectively. Then, the user removes the cover 62 from the container body 61 of the tube container 6 and, as illustrated in Fig. 16, squeezes a gelatinous oral tobacco material 3F that is a content of the container body 61 into the tobacco reception portion 40 that is the recessed depression formed on a surface of the gum molded body 4D. The tobacco gum 7 in a state in which the oral tobacco material 3F is thus held in the tobacco reception portion 40 of the gum molded body 4D is thrown into the oral cavity, these are chewed together, and the tobacco gum 7 can be tasted.

According to the present embodiment, the amount of the oral tobacco material 3F to be dispensed (squeezed) from the tube container 6 into the tobacco reception portion 40 of the gum molded body 4D can be freely changed by a user in accordance with feelings and likings. It is thus possible to provide the oral tobacco product 1 that is highly freely enjoyable and highly satisfactory for a user. Needless to say, gum molded bodies 4 of a plurality of different types of tastes, flavors, and the like may be housed in the gum housing portions 52 in the inner pack 5B according to the present embodiment. Consequently, a user can freely change the type of the gum molded body 4 to be combined with the oral tobacco material 3F. In addition, a plurality of tube containers 6 may be disposed in the first region R1 of the inner pack 5B. In this case, a plurality of the tube containers 6 may be housed in one tobacco housing portion 51B, or a plurality of tube containers 6 may be housed individually in the tobacco housing portion 51B. When a plurality of tube containers 6 are housed in the inner pack 5B, the type of the tobacco raw material and the type of the flavor in the oral tobacco materials 3F charged in the inner portion may differ between one tube container 6 and the other tube containers 6. Consequently, a user can freely change the type of the oral tobacco material 3F that is to be combined with the gum molded body 4.

Although the gelatinous oral tobacco material 3F is charged in the tube container 6 in the above-described example, a liquid oral tobacco material may be charged instead in the tube container 6. The container in which a gelatinous or liquid oral tobacco material is to be charged is not limited to be in a tube form. For example, various containers such as a sauce bottle and a spuit container can be employed.

Needless to say, the form of a gum molded body to be combined with a gelatinous or liquid oral tobacco material is not limited to the form illustrated in Fig. 11. However, when a gelatinous or liquid oral tobacco material is used, it is preferable that the gum molded body has the tobacco reception portion 40 for receiving the oral tobacco material. For example, the gum molded body according to the present embodiment may have a cup shape suitable for receiving a gelatinous or liquid oral tobacco material without spilling the oral tobacco material. However, when the viscosity of the gelatinous or liquid oral tobacco material is high to some extent and the oral tobacco material does not spill from the gum molded body in the present embodiment, the gum molded body does not necessarily include the recessed or hollow tobacco reception portion 40.

Embodiments and modifications of the oral tobacco product according to the present invention have been described above. The oral tobacco product according to the present invention is, however, not limited thereto. The embodiments and the modifications described above can be combined, as appropriate.

### Reference Signs List

- 1: oral tobacco product
- 2: outer package
- 3: oral tobacco material
- 4: gum molded body
- 5: inner pack
- 6: tube container
- 40: tobacco reception portion
- 51: tobacco housing portion
- 52: gum housing portion

## Claims

1. An oral tobacco product comprising:
an oral tobacco material that contains a tobacco raw material;
a gum molded body that contains a gum base and that does not contain a tobacco raw material; and
a packaging material that houses each of the oral tobacco material and the gum molded body in a state of being separated from each other.

2. The oral tobacco product according to claim 1, wherein the packaging material includes the tobacco housing portion that houses the oral tobacco material, and a gum housing portion that houses the gum molded body, respectively, in a state in which the oral tobacco material and the gum molded body are separated from each other.

3. The oral tobacco product according to claim 1 or claim 2, wherein the packaging material houses a plurality of different types of gum molded bodies.

4. The oral tobacco product according to any one of claims 1 to 3, wherein the packaging material houses a plurality of different types of oral tobacco materials.

5. The oral tobacco product according to any one of claims 1 to 4, wherein the gum molded body includes a tobacco reception portion for receiving the oral tobacco material.

6. The oral tobacco product according to claim 5, wherein the tobacco reception portion is hollow or recessed.

7. The oral tobacco product according to any one of claims 1 to 6, wherein the oral tobacco material is solid.

8. The oral tobacco product according to any one of claims 1 to 6, wherein the oral tobacco material is gelatinous or liquid.

9. The oral tobacco product according to claim 8, wherein the gelatinous or liquid oral tobacco material in a state of being charged in a container for charging the gelatinous or liquid oral tobacco material is housed in the tobacco housing portion.
